# EUROPÄISCHE PATENTSCHRIFT

(11) **EP 0 497 108 B1**
(45) Veröffentlichungstag und Bekanntmachung des Hinweises auf die Patenterteilung: **13.11.1996**
(21) Anmeldenummer: 92100317.4
(22) Anmeldetag: 10.01.1992
(51) Int. Cl.: F16D 3/41, B60K 17/24

(54) **Gelenk für Gelenkwellen**
Joint for articulated shafts
Joint pour arbres articulés

(30) Priorität: 29.01.1991 DE 4102515
(43) Veröffentlichungstag der Anmeldung: 05.08.1992
(73) Patentinhaber: ETABLISSEMENT SUPERVIS, FL-9490 Vaduz (LI)
(72) Erfinder: Lutz, Christian, A-6714 Nüziders (AT)
(74) Vertreter: Hefel, Herbert, Dipl.-Ing.

(56) Entgegenhaltungen:
- EP-A- 260 196
- DE-A- 2 818 167
- FR-A- 2 527 718
- GB-A- 1 298 552
- GB-A- 2 082 989
- GB-A- 2 182 728
- US-A- 2 271 974

## Beschreibung

Die Erfindung bezieht sich auf ein Gelenk für Gelenkwellen, beispielsweise für Lenksäulen bei Kraftfahrzeugen mit den Merkmalen des Oberbegriffes des Patentanspruches 1.

In diesem Zusammenhang ist das Gelenk für Gelenkwellen nach der US-PS 2 271 974 zu erwähnen. Das Ende der einen Welle ist glockenförmig ausgebildet. In diesem Gelenkteil ist als Koppelglied ein diesen Teil quer durchsetzender Zapfen gelagert mit einem verbreiterten und eine zentrale Aussparung aufweisenden Mittelteil, an welchem außenseitig und rechtwinkelig gegenüber der Zapfenachse versetzt, diametral zueinander und mit ihren Achsen fluchtende Lagerbuchsen angeformt sind. Die Lagerbuchsen nehmen einen die zentrale Aussparung des Zapfens durchsetzenden Bolzen auf. In diese zentrale Aussparung des Zapfens ragt das Ende der anderen Welle, das eine vom mittleren Abschnitt des Bolzens durchsetzte Querbohrung aufweist. Zur Aufnahme des als Koppelglied dienenden Zapfens gehen im glockenartigen Gelenkteil von dessen Rand an diametral einander gegenüberliegenden Stellen Einschnitte aus, die sich dann schlüssellochartig erweitern. Die Breite dieser Einschnitte entspricht dem Durchmesser des als Koppelglied dienenden Zapfens und der Durchmesser der anschließenden Erweiterung dem Außendurchmesser der Gehäuse der Nadellager, die die Enden dieses Zapfens aufnehmen, wobei die Gehäuse der Nadellager jeweils mittels einer Verriegelungsschraube fixiert sind. Das hier verwendete Koppelglied ist spanabhebend geformt.

Dieses bekannte Gelenk ist aus mehreren Gründen nicht zweckmäßig: Die Herstellung des Koppelgliedes durch spangebende Verformung ist für einen Massenartikel zu aufwendig und damit zu teuer. Es muß ja nicht nur die zentrale Bohrung geschaffen werden für die Aufnahme des Endabschnittes der einen Welle, sondern auch die Bohrungen in den Lagerbuchsen für die Aufnahme des Querbolzens. Die vom Rand des glockenartigen Gelenkteiles ausgehenden Einschnitte, in welche bei der Montage des Gelenkes die Zapfen des Koppelgliedes eingeschoben werden, schwächen dieses Konstruktionsteil ganz erheblich. Vor allem aber sind die Hebelarme für die Kraft- und Momentenübertragung für den einen Endabschnitt der einen Welle, die in die zentrale Aussparung des Koppelgliedes ragt, denkbar ungünstig im Verhältnis zu den Hebellängen für den anderen Wellenabschnitt. Die von einem Gelenk zu übertragenden Kräfte bzw. Momente sind durch die Belastungsfähigkeit des schwächsten Gliedes innerhalb des Gelenkes bestimmt. Wird für die Hebelarme, die der Berechnung der auftretenden Kräfte und Momente zugrunde zu legen sind, der ungünstigste Fall angenommen, nämlich daß die Zapfen bzw. die Bohrung nur an ihrem äußeren Ende tragen, so beträgt das Längenverhältnis der hier zu berücksichtigenden beiden Hebelarme ca. 4 zu 1,5, was wohl augenscheinlich macht, daß ein solches Gelenk technisch gesehen völlig unausgereift ist und daher für die Praxis keinerlei Bedeutung hat. Ferner ist noch zu bedenken, daß das die eine Welle tragende Lager seitlich des glockenförmigen Gelenkteiles angeordnet ist, so daß zwischen dem Gelenkmittelpunkt und dem erwähnten Wellenlager ein nicht unerheblicher Abstand vorliegt, der das Auftreten von Biegebeanspruchungen begünstigt. Aus all diesen Gründen hat ein Gelenk dieser bekannten Bauart keine reellen Marktchancen. Ein Gelenk dieser Bauart ist nach Wissen der Patentinhaberin bislang auf dem Markt nicht angeboten worden.

Ein Gelenk für Gelenkwellen, mit einem Zapfenkreuz als Koppelglied, dessen Zapfenpaare ungleiche Achsenlänge aufweisen, wobei das Ende einer Welle als Gabel ausgebildet ist, in welcher das Zapfenpaar mit der kurzen Achslänge drehbar gelagert ist und wobei das Ende der anderen Welle als glockenförmiges Gelenkteil ausgebildet ist, in welchem das längere Zapfenpaar drehbar gelagert ist, entsprechend dem Oberbegriff des Patentanspruchs 1, ist aus der DE-A-2818 167 bekannt. Die Außenseite des glockenförmigen Gelenkteils besitzt bei diesem Gelenk keine Einrichtungen zur Aufnahme und/oder Anlage eines Lagers oder eines Lagerringes.

Beim Gegenstand der EP-A-260 196 handelt es sich hingegen nicht um eine Gelenktype, die dem Anmeldungsgegenstand entspricht, sondern um ein sogenanntes Tripodengelenk, wie es bei Antriebswellen für Kraftfahrzeuge eingesetzt wird. In einem topfförmigen Teil sind achsparallele Rinnen ausgespart, in welchen Rollen gleiten, die am anderen Wellenteil gelagert sind, und zwar um Achsen, die sternförmig zueinander angeordnet sind und die ihrerseits rechtwinklig zur Achse des Wellenteiles stehen. Solche Gelenkwellen werden für die Antriebswellen bei Kraftfahrzeugrädern eingesetzt.

Bekannt ist ferner eine Kupplung aus der US-PS 10 03 017, deren eines Teil als zylindrischer Topf ausgebildet ist, das andere Kupplungsteil ist gabelartig gestaltet. Verbunden sind diese beiden Kupplungsteile durch ein Zapfenkreuz, dessen paarweise vorgesehene Zapfen verschiedene Längen aufweisen, wobei die Differenz der Längen etwa der Wandstärke des zylindrischen Topfes entspricht, der das eine Kupplungsteil bildet. In diesem zylindrischen Topf sind an diametral zueinander liegenden Stellen Bohrungen vorgesehen für die Aufnahme des einen Zapfenpaares des Zapfenkreuzes, das andere Zapfenpaar wird vom gabelartigen Kupplungsteil aufgenommen. Eine flexible Hülse überdeckt als Dichtmanschette diese so gestaltete Kupplung, wobei diese Manschette mit ihrem einen Teil an der Außenseite des zylindrischen Topfes anliegt und hier mit einer Bandage befestigt ist. Diese vorbekannte Konstruktion dürfte allerdings über ihr papierenes Stadium nie hinausgekommen sein, denn wie diese Unterlagen zeigen, ist es nicht möglich, das Zapfenkreuz in der dargestellten Art in den zylindrischen Topf einzufügen. Die für die Aufnahme der Zapfen vorgesehenen Bohrungen im zylindrischen Topf sind zwar größer als der Durchmesser der Zapfen selbst, um Lagerhülsen hier einzufügen, und der innere Rand des zylindrischen Topfes ist zusätzlich abgefast, dennoch ist es unmöglich, das Zapfenkreuz in der dargestellten Weise einzufügen, so daß diese vorbekannte Konstruktion für den einschlägigen Fachmann wohl kaum als besondere Anregung dienen kann. Über die Lagerung dieses Kupplungsteiles selbst ist aus dieser Veröffentlichung nichts zu entnehmen.

In diesem Zusammenhang ist auch das Lenkwellenlager nach der US-PS 4 608 881 zu nennen. Die Lenkwelle, deren unteres Ende gabelartig geformt ist, ist von einem Wellenrohr aufgenommen, wobei im Bereich des unteren gabelartigen Endes der Lenkwelle diese gegenüber dem Wellenrohr durch ein Kugellager abgestützt ist. In jenem Bereich, in dem die Lenkwelle in das gabelartige Ende übergeht, ist eine zylindrische Fläche mit einer gabelseitigen Schulter vorgesehen zur Aufnahme des inneren Laufringes eines Kugellagers. Der Außenring des Kugellagers ist von einem aufgespritzten Kunststoffring aufgenommen, er liegt mit seiner Außenseite an der Innenwand des Wellenrohres an. Um diesen Kunststoffring gegenüber der zylindrischen und glatten Wand dieses Rohres zu fixieren und eine eventuelle axiale Verschiebung dieses Lagerteiles zu verhindern, sind an diesem Kunststoffring parallel zur Achse des Lagers Fortsätze angeformt, in welchen quer zur Lagerachse angeordnete Gewindebohrungen zur Aufnahme von Befestigungsschrauben vorgesehen sind. Die Führungsansätze liegen an entsprechend korrespondierend gestalteten Flächenabschnitten des Rohres an und Befestigungsschrauben sind durch in der Wand des Rohres ausgesparte Öffnungen eingedreht und festgezogen. Damit ist der Außenring des Lagers gegenüber diesem Wellenrohr fixiert. Diese vorbekannte Konstruktion befaßt sich primär mit der Fixierung eines Außenringes eines Kugellagers in einem Wellenrohr bei einer Lenkwelle.

Auch die vorbekannte kippbare Lenksäule für Kraftfahrzeuge nach der DE-05 38 11 215 ist hier zu erwähnen. Diese kippbare Lenksäule weist ein Gehäuse aus einem unteren, an der Karosserie festgelegten Gehäuseteil und ein oberes Gehäuseteil auf, welches um eine horizontale Kippachse gelenkig mit dem unteren Gehäuseteil verbunden ist. An den Stirnseiten der gegeneinander gerichteten Enden der beiden Gehäuseteile sind an sich diametral zur Kippachse gegenüberliegenden Stellen Widerlager für Sperrglieder ausgebildet, wobei keilförmige Sperrglieder zwischen den in Richtung der Längsachse der Lenksäule wirksamen Widerlagern beider Gehäuseteile vor-und zurückbeweglich sind. Bei dieser Lenksäule ist das gabelseitige Ende der Lenkwelle gegenüber dem äußeren Hüllrohr in der Weise abgestützt und gelagert, wie dies auch bei der Konstruktion nach der bereits erörterten US-PS 4 608 881 der Fall ist, wenn von Details abgesehen wird.

Bekannt ist ferner eine Fahrzeugwelle mit einem Gelenk (GB-A-20 82 989), das aus einem glockenförmigen, umfangsgeschlossenen Gelenkteil besteht, in diesen umfangsgeschlossenen Gelenkteil ragt das Ende der anderen Welle, wobei hier als formschlüssige Kraftübertragungsglieder Kugeln vorgesehen sind, die in einem Käfig gehalten werden und die entlang von Wälzbahnen an der Innenseite des glockenartigen Gelenkteiles bzw. am Ende der einen Welle abrollen. Der glockenartige Gelenkteil besitzt zwei umlaufende und umfangsgeschlossene Ringflächen, welche denselben Außendurchmesser besitzen und auf welchen der Innenring eines Kugellagers aufliegt. Die Anordnung ist dabei so getroffen, daß die Mittelebene des Kugellagers mit dem Mittelpunkt des Gelenkes im wesentlichen zusammenfällt.

Ausgehend von diesem Stand der Technik zielt die Erfindung darauf ab, ein Gelenk für Gelenkwellen der eingangs genannten Art bzw. deren Lagerung dahingehend zu verbessern, daß die Beanspruchungsverhältnisse beim betriebsmäßigen Einsatz gegenüber vergleichbaren Konstruktionen günstiger gestaltet werden, was erfindungsgemäß durch jene Maßnahmen erzielt wird, die Gegenstand und Inhalt des kennzeichnenden Teiles des Patentanspruches sind. Dank dieses Vorschlages fallen die Mittelebene des Lagers und der Mittelpunkt des Gelenkes auch bei einer solchen Konstruktion praktisch zusammen, deren äußerer glockenartiger Gelenkteil keine umfangsgeschlossenen Auflageflächen für ein Lager oder einen Lagerring besitzen.

Um die Erfindung zu veranschaulichen, wird sie anhand der Zeichnung näher erläutert. Es zeigen:
- Die Fig. 1 und 2: in zwei Ansichten, z. T. aufgerissen, das glokkenartige Gelenkteil;
- die Fig. 3 und 4: Ansicht und Seitensicht des Zapfenkreuzes;
- die Fig. 5 und 6: Ansicht und Seitensicht (z. T. aufgerissen) des gabelförmigen Endes der einen Welle und
- die Fig. 7 und 8: zwei jeweils um 90° versetzte Längsschnitte durch das zusammengebaute und fertig montierte Gelenk;
- die Fig. 9: das zusammengebaute und fertig montierte Gelenk in seiner relativen Lage zu einem Chassisteil und seine Lagerung.

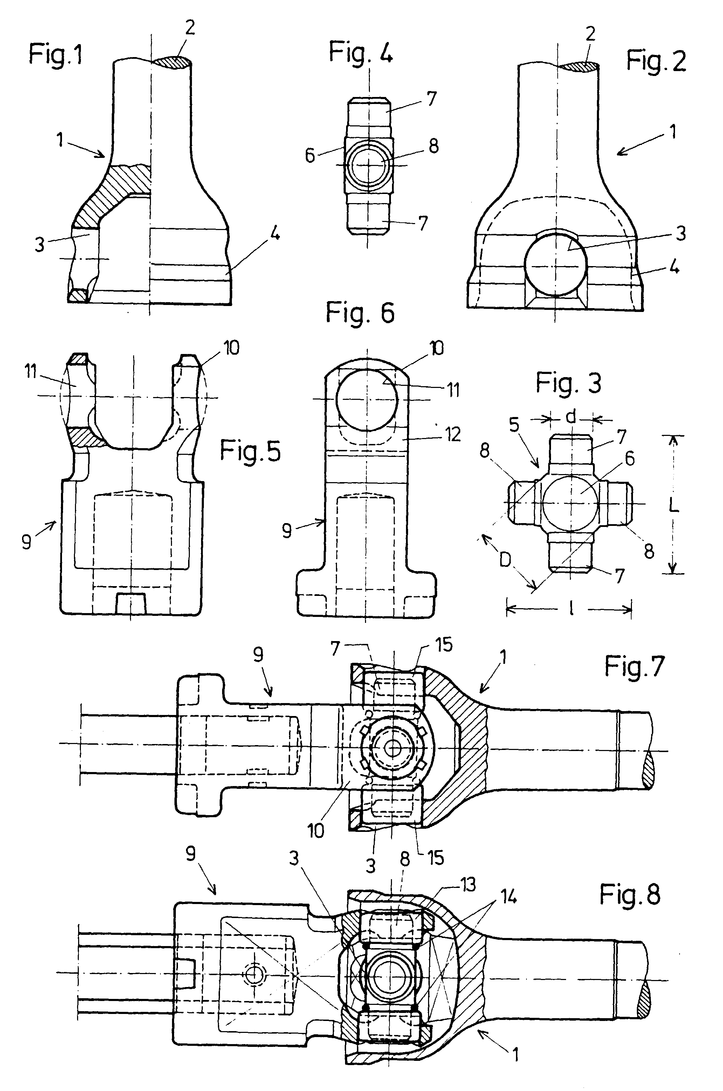

Die Fig. 1 und 2 veranschaulichen den glockenförmig aufgeweiteten Gelenkteil 1, der den Endabschnitt der einen Welle 2 bildet. An einander diametral gegenüberliegenden Stellen sind umfangsgeschlossene Bohrungen 3 vorgesehen, welche der Aufnahme von Nadellagern dienen, wobei zumindest Abschnitte des Außenrandes der Bohrungen 3 abgeflacht sind. Die Außenseite dieses Gelenkteiles besitzt eine stufenartige Schulter 4, welche zur Aufnahme bzw. Anlage eines Lagers oder Lagerringes vorgesehen ist.

Das im Fließ-Preß-Verfahren gefertigte Zapfenkreuz 5 besitzt einen Mittelteil 6 und zwei kreuzartig und rechtwinklig zueinander stehende Zapfenpaare 7 und 8, wobei die Zapfen der Zapfenpaare zweckmäßigerweise gleiche Durchmesser aufweisen, die Achslänge L des einen Zapfenpaares 7 ist aber größer als die Achslänge 1 des anderen Zapfenpaares 8. Das Verhältnis des Durchmessers D des Mittelteiles 6 des Zapfenkreuzes 5 zum Durchmesser d der Zapfen der Zapfenpaare 7, 8 beträgt ca. 1,5.

Der Endabschnitt der anderen Welle 9 ist als Gabel ausgebildet, wobei die die Gabel bildenden Arme 10 mit Bohrungen 11 bestückt sind. Die Außenseiten 12 der Arme 10 der Gabel sind Kugelflächen, deren Radien etwa der halben Außenweite der Gabel entspricht. In Fig. 5 ist die Hüllkurve dieser Kugelfläche durch eine strichlierte Linie angedeutet.

Die Fig. 7 und 8 zeigen nun das fertig montierte Gelenk in zwei um 90° zueinander versetzten Längsschnitte, das aus den vorstehend besprochenen Teilen aufgebaut ist. Zur Montage wird das Zapfenkreuz 5 mit seinem kurzen Zapfenpaar 8 in die Bohrungen 11 des Endabschnittes der Welle 9 eingesetzt. Die Druchmesser der Bohrungen 11 sind größer als jene der Zapfen 8 und anschließend werden von außen her Nadellager 13 mit ihren Gehäusen eingepreßt. Auch 0-Ringe 14 als Dichtung für die Nadellager werden vorgesehen. Die äußeren Ränder der Bohrungen 11 werden von der Außenseite her verstemmt und damit die Nadellager 13 mit ihren Gehäusen fixiert. Nun wird der Endabschnitt der Welle 9 mit dem bereits eingesetzten Zapfenkreuz 5 in den anderen Gelenkteil 1 eingefügt, indem die Zapfen des Zapfenpaares 7 in die Bohrungen 3 eingefädelt werden. Anschließend werden, ebenfalls von außen her, Nadellager 15 mit ihren Gehäusen eingepreßt. Anschließend werden auch hier die äußeren Ränder der Bohrungen 3 verstemmt, um so die Nadellager 15 mit ihren Gehäusen zu fixieren. Damit ist das Gelenk funktionsbereit montiert.

Bei der Montage der Welle in eine Lenksäule wird das Wellenlager auf den glockenartigen Gelenkteil 1 aufgeschoben und liegt an dessen äußerer Schulter 4 an. Sollten sich beim Verstemmen der Nadellager 15 bzw. deren Gehäuse am Rand der Bohrungen 3 kleine Grate gebildet haben, so behindern diese das Aufschieben des Wellenlagers nicht, da ja zumindest die Abschnitte der äußeren Ränder der Bohrungen 3 abgeflacht ausgebildet sind, an welchen die Verstemmungen vorgesehen werden, so daß eventuell kleine Grate, die sich beim Verstemmen bilden, innerhalb des Hüllkreises des entsprechenden Querschnittes des glockenförmigen Gelenkteiles 1 befinden.

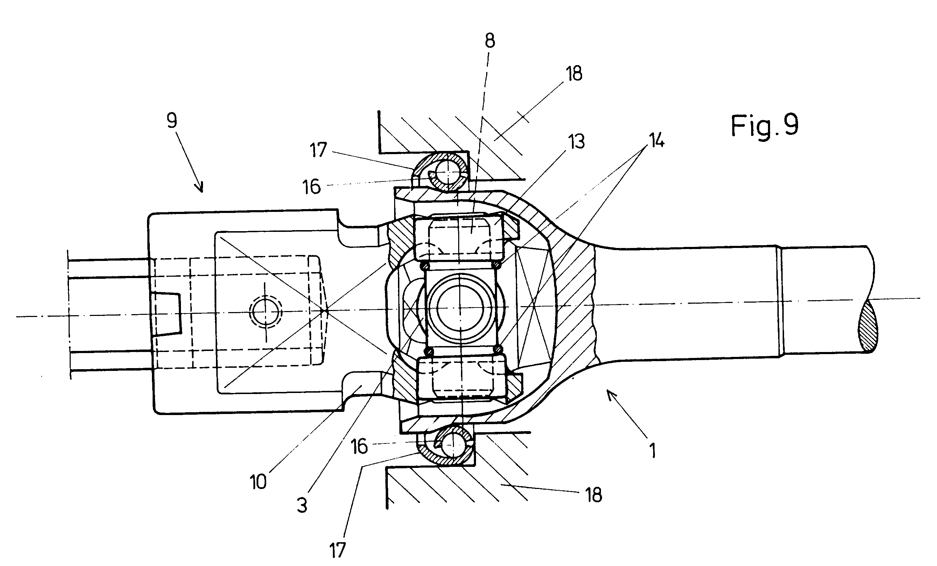

Fig. 9 zeigt nun die Welle zusammen mit ihrer Lagerung. An der stufenartigen Schulter 4 ist ein innerer Wälzlagerring 16 eines Wälzlagers aufgezogen, dessen äußerer Ring 17 an einem hier nicht näher dargestellten Gehäuse oder Chassis 18 anliegt. Es ist aus dieser Darstellung nach Fig. 9 ersichtlich und erkennbar, daß der Mittelpunkt des Gelenkes in bzw. nahe der Mittelebene des vom glockenförmigen Gelenkteiles 1 aufgenommenen Lagers bzw. Lagerringes 16, 17 liegt, wodurch besonders günstige Lagerverhältnisse erreicht werden, da dadurch das Gelenk selbst von den Lagerkräften kaum beansprucht wird.

Es wird also danach getrachtet, daß die Mittelebene des Lagers und der Mittelpunkt des Gelenkes möglichst zusammenfallen, so daß Welle und Gelenk beim betriebsmäßigen Einsatz günstigen Belastungsverhältnissen ausgesetzt sind. Die Gehäuse der Nadellager 13 und 15 sind so bemessen und so eingesetzt, daß sie gegenüber der Umfangskontur der sie aufnehmenden Konstruktionsteile nicht vorstehen, so daß weder die Aufnahme des äußeren Lagers noch die Beweglichkeit der Gabel bei maximaler Achslänge 1 des Zapfenpaares 8 innerhalb des glockenförmigen Gelenkteiles 1 beeinträchtigt werden. Dadurch sind hohe Drehmomente übertragbar, da das Verhältnis der Längen der Hebelarme, die der Berechnung der auftretenden Kräfte und Momente zugrunde zu legen sind, äußerst günstig ist und einen maximal erreichbaren Wert aufweist.

### Legende zu den Hinweisziffern

- 1: Gelenkteil
- 2: Welle
- 3: Bohrung
- 4: Schulter
- 5: Kreuzzapfen (Zapfenkreuz)
- 6: Mittelteil
- 7: Zapfenpaar
- 8: Zapfenpaar
- 9: Welle
- 10: Arm
- 11: Bohrung
- 12: Außenseite
- 13: Nadellager
- 14: 0-Ring
- 15: Nadellager
- 16: Wälzlagerring
- 17: Außenring
- 18: Gehäuse

## Patentansprüche

1. Gelenk für Gelenkwellen, beispielsweise für Lenksäulen bei Kraftfahrzeugen, mit einem Zapfenkreuz (5) als Koppelglied, dessen Zapfenpaare (7, 8) ungleiche Achslängen (L, 1) aufweisen, wobei das Ende einer Welle (9) als Gabel ausgebildet ist, in welcher das Zapfenpaar (8) mit der kurzen Achslänge (1) drehbar gelagert ist und wobei das Ende der anderen Welle (2) als glockenförmiges Gelenkteil (1) ausgebildet ist, in welchem das längere Zapfenpaar (7) in umfanggeschlossenen Bohrungen (3) drehbar gelagert ist, dadurch gekennzeichnet, daß die Außenseite des glockenförmigen Gelenkteiles (1) stufenartig abgesetzt ist zur Aufnahme und/oder Anlage eines Lagers oder eines Lagerringes (16, 17) und daß der Mittelpunkt des Gelenkes in oder nahe der Mittelebene des vom glockenförmigen Gelenkteil (1) aufgenommenen und um die Enden der zapfenpaarlagernden Bohrungen (3) liegenden Lagers oder Lagerringes (16, 17) liegt.

## Claims

1. A joint for universal-joint shafts, for example for steering columns in motor vehicles, with a journal cross (5) as a coupling member, the pairs of journals (7, 8) of which have unequal axial lengths (**L, 1**), wherein the end of one shaft (9) is constructed as a fork in which the pair of journals (8) with the short axial length (**1**) is rotatably mounted, and wherein the end of the other shaft (2) is constructed as a bell-shaped joint member (1) in which the longer pair of journals (7) is rotatably mounted in closed peripherally bores (3), **characterized in that** the outside of the bell-shaped joint member (1) is stepped for the reception and/or the abutment of a bearing or a bearing ring (16, 17), and the centre of the joint is situated in or close to the median plane of the bearing or bearing ring (16, 17) received by the bell-shaped joint member (1) and arranged around the ends of the bores (3) supporting the pairs of journals.

## Revendications

1. Articulation pour des arbres articulés, par exemple des colonnes de direction dans le cas des véhicules à moteurs, avec un croisillon (5), comme organe d'accouplement, dont les paires de tourillons présentent des axes de longueurs inégales (L, 1), l'extrémité d'un arbre (9) étant constituée comme une fourche, dans laquelle la paire de tourillons (8) dont l'axe à la longueur la plus courte (1) est monté de façon à pouvoir tourner et l'extrémité de l'autre arbre (2) étant constituée comme une pièce d'articulation (1) en forme de cloche, dans laquelle la paire de tourillons (7), dont l'axe est plus long, est montée de façon à pouvoir tourner dans des alésages (3) dont le pourtour est fermé,
articulation caractérisée en ce que
le coté extérieur de la pièce d'articulation (1) en forme de cloche est pourvu de gradins étagés pour recevoir et/ou servir d'appui à un palier ou une bague de palier (16, 17) et en ce que le centre de l'articulation se trouve dans le plan médian ou à proximité du plan médian du palier ou de la bague de palier (16, 17), logé dans la pièce d'articulation (1) en forme de cloche et se trouvant autour des extrémités des alésages (3) dans lesquels sont montées les paires de tourillons.
